# EUROPÄISCHE PATENTSCHRIFT

(11) **EP 1 720 753 B1**
(45) Veröffentlichungstag und Bekanntmachung des Hinweises auf die Patenterteilung: **13.05.2009**
(21) Anmeldenummer: 04803771.7
(22) Anmeldetag: 11.12.2004
(51) Int. Cl.: B60W 30/18, F16H 61/04, F16H 63/50, B60W 10/06, B60W 10/10

(54) **VERFAHREN ZUR ERHÖHUNG DER SPONTANITÄT VON ÜBERSCHNEIDUNGSSCHALTUNGEN IN EINEM AUTOMATGETRIEBE**
METHOD FOR INCREASING THE SPONTANEITY OF OVERLAPPING SHIFTING OPERATIONS IN AN AUTOMATIC TRANSMISSION
PROCEDE POUR ACCROITRE LA SPONTANEITE DE PASSAGES DE VITESSES A CHEVAUCHEMENT DANS UNE TRANSMISSION AUTOMATIQUE

(30) Priorität: 09.01.2004 DE 102004001381
(43) Veröffentlichungstag der Anmeldung: 15.11.2006
(73) Patentinhaber: ZF FRIEDRICHSHAFEN Aktiengesellschaft, 88038 Friedrichshafen (DE)
(72) Erfinder: STEINHAUSER, Klaus, 88079 Kressbronn (DE); POPP, Christian, 88079 Kressbronn (DE); SCHIELE, Peter, 88079 Kressbronn (DE)
(86) Internationale Anmeldenummer: PCT/EP2004/014131
(87) Internationale Veröffentlichungsnummer: WO 2005/065981

(56) Entgegenhaltungen:
- DE-A1- 10 234 439
- DE-A1- 10 235 001
- DE-A1- 10 308 689
- DE-A1- 19 955 987
- US-B1- 6 254 509

## Beschreibung

Die vorliegende Erfindung betrifft ein Verfahren zur Erhöhung der Spontaneität von Überschneidungsschaltungen in einem Automatgetriebe eines Kraftfahrzeugs gemäß dem Oberbegriff des Patentanspruchs 1, wie in der DE 19955987 dargestellt.

Die immer steigenden Anforderungen an die Funktionalität der Automatgetriebe durch die Forderung nach mehr Spontaneität, die immer größer werdende Anzahl der zu schaltenden Gänge, die verbrauchsoptimierte Auslegung der Automatgetriebe mit größeren Fahranteilen in den hohen Gängen sowie die große Anzahl der auszuführenden Rückschaltungen beim Abbremsen des Fahrzeugs bis zum Stillstand führen dazu, dass Gänge eines Automatgetriebes immer schneller und häufiger hintereinander geschaltet werden sollen.

Bei Automatgetrieben, welche einen Wandler umfassen können, bei denen Schaltungen mittels einer Überschneidungsschaltung von zwei Kupplungen bzw. Schaltelementen ausgeführt werden, muss, wenn eine Schaltung angefordert wird, eine Kupplung hydraulisch abgeschaltet werden und eine andere Kupplung hydraulisch zugeschaltet werden, wobei hier Totzeiten und Verzögerungen entstehen, die als unangenehm empfunden werden.

Zudem tritt bei Rückschaltungen im Schubbetrieb eine Verzögerung des Fahrzeugs ein, welche durch den zusätzlichen Bedarf an kinetischer Energie zum Beschleunigen der rotatorischen Massen von Motor und Getriebe während der Übersetzungsänderung verursacht wird.

Im Rahmen der DE 199 55 987 A1 der Anmelderin wird vorgeschlagen, zur Erhöhung der Spontaneität bei Schaltungen den Motor des Fahrzeugs während des Übergangs von einer kleineren zu einer größeren Übersetzung, d.h. bei einer Rückschaltung, im Schubbetrieb geregelt zu befeuern; auf diese Weise kann die benötigte Beschleunigungsenergie für die rotatorischen Massen durch den Motor selbst aufgebracht werden.

Der vorliegenden Erfindung liegt daher die Aufgabe zugrunde, ausgehend von dem genannten Stand der Technik, ein Verfahren zur Erhöhung der Spontaneität von Überschneidungsschaltungen in einem Automatgetriebe anzugeben, welches die Reaktionszeiten der Schaltungen, insbesondere im Schubbetrieb und im Teillastbetrieb, erheblich verkürzt.

Diese Aufgabe wird durch die Merkmale des Patentanspruchs 1 gelöst. Weitere Ausgestaltungen und Varianten gehen aus den Unteransprüchen hervor.

Demnach wird vorgeschlagen, zur Erhöhung der Spontaneität einer Überschneidungsschaltung in einem Automatgetriebe, mit dem Schaltbefehl bzw. unmittelbar danach, eine Motorbefeuerung durch die Getriebesteuerung vorzugeben, durch die ein Aufreißen der abschaltenden Kupplung bzw. des Schaltelementes oder eine Erhöhung des Drehzahlgradienten (Turbinendrehzahl) oder eine Kombination beider Maßnahmen erzielt wird, obwohl der Druckabbau der abschaltenden Kupplung noch nicht soweit fortgeschritten ist, dass die Kupplung öffnen würde bzw. den Drehzahlgradienten zulassen würde.

Hierbei kann die zusätzliche Motorbefeuerung sowohl über die Vorgabe einer einzustellenden Solldrehzahl als auch über die Vorgabe eines einzustellenden Sollmotormoments durch die Getriebesteuerung erfolgen.

Gemäß der Erfindung ist diese Vorgehensweise jeweils bis zur maximal erreichbaren Volllastkurve anwendbar; es kann jedoch auch nur ein Teil des zur Verfügung stehenden Überschusspotentials genutzt werden, wobei dies von dem Grad der zu erreichenden Spontaneitätserhöhung abhängt. Die Vorgabe kann auch durch Softwareteile außerhalb der Getriebesteuerung, die jedoch über Kommunikationsschnittstellen mit der Schaltablaufsoftware direkt kommunizieren, ausgegeben werden.

Durch die erfindungsgemäße Konzeption ergibt sich sowohl eine Verbesserung der Reaktionszeit bei der Schaltung als auch eine Erhöhung des Drehzahlgradienten während der Schaltung, was zu einer Verkürzung der Schleifzeit und damit insgesamt der Schaltung führt. Dies führt demnach für den Fahrer zu einer direkteren Reaktion auf seinen Fahrerwunsch und insgesamt im Zusammenspiel mit der verkürzten Schaltung zu einem spontaneren und sportlicheren Eindruck des Fahrzeugs. Eine geringe Mehrbelastung der Schaltelemente wird bewusst in Kauf genommen, um eine Erhöhung der Spontaneität zu erreichen.

Das Öffnen des Schaltelementes, welches die Drehzahl auf der alten Synchrondrehzahl hält, wird hierbei zur Absicherung einer ungewollten Übertragung der durch die Getriebesteuerung zusätzlichen angeforderten Motorbefeuerung auf den Abtrieb überwacht, wobei, wenn eine ungewollte Übertragung stattfindet, die Motorbefeuerung unterbrochen wird.

Dazu muss das Öffnen dieser Kupplung bzw. des Schaltelementes bis zu einer definierten Zeit nach Start der zusätzlichen Motorbefeuerung erfolgen und sich auch anschließend ein entsprechender Drehzahlgradient in Richtung neue Synchrondrehzahl einstellen. Dies kann auch durch die Beobachtung einer sich stetig und in einem bestimmten Maße reduzierender Differenzdrehzahl zur neuen Synchrondrehzahl abgesichert werden. Außerdem darf gemäß der Erfindung die zusätzliche Motorbefeuerung durch die Getriebesteuerung, wenn nicht eine weitere Schaltung ausgelöst wird, nicht über eine bestimmte Dauer über das Erreichen der neuen Synchrondrehzahl hinaus anstehen.

Gemäß der Erfindung kann über unterschiedliche Bildung der Momentensignale für die Bestandteile des Schaltablaufs auf die richtige Ausführung der zusätzlichen Motorbefeuerung reagiert werden. So kann, wenn die tatsächlich ausgeführte zusätzliche Motorbefeuerung auf die Momenteneingangsgröße für die zu schaltende Kupplung bzw. das zu schaftende Schaltelement übermittelt wird, die zu schaltende Kupplung auf eine aus bestimmten Gründen eventuelle nicht ausgeführte zusätzliche Motorbefeuerung reagieren und das Erreichen der Synchrondrehzahl durch eine Druckerhöhung unterstützen.

Für die abschaltende Kupplung wird erfindungsgemäß die tatsächlich ausgeführte zusätzliche Motorbefeuerung nicht übermittelt bzw. es wird nur auf die der Laststellung des Fahrers entsprechende Momentengröße zugegriffen, da sonst der Gewinn durch die zusätzliche Motorbefeuerung durch eine Druckreaktion an der abschaltenden Kupplung wieder reduziert wird.

Im Rahmen weiterer Varianten des erfindungsgemäßen Verfahrens ergeben sich weitere Steigerungsmöglichkeiten für die Spontaneität aus der Kombination von Maßnahmen, wie beispielsweise zusätzliche Motorbefeuerung, Druckabsenkung bei der abschaltenden Kupplung und Druckerhöhung bei der zuschaltenden Kupplung mit entsprechenden Auswirkungen auf Beschleunigungsverläufe und Komfortverhalten.

Das erfindungsgemäße Verfahren wird im folgenden anhand der beigefügten Figuren beispielhaft näher erläutert. Es zeigen:
- Fig. 1: ein Diagramm des Verläufe der Drehzahlen und der Drücke bei einer Rückschaltung im Teil- lastbetrieb nach dem Stand der Technik;
- Fig. 2: ein Diagramm des Verläufe der Drehzahlen und der Drücke bei einer Rückschaltung im Teil- lastbetrieb gemäß der vorliegenden Erfin- dung;
- Fig. 3: ein Diagramm des Verläufe der Drehzahlen und der Drücke bei einer Rückschaltung im Teil- lastbetrieb gemäß einer Variante der vorlie- genden Erfindung und
- Fig. 4: ein Diagramm des Verläufe der Drehzahlen und der Drücke bei einer Rückschaltung im Teil- lastbetrieb gemäß einer weiteren Variante der vorliegenden Erfindung.

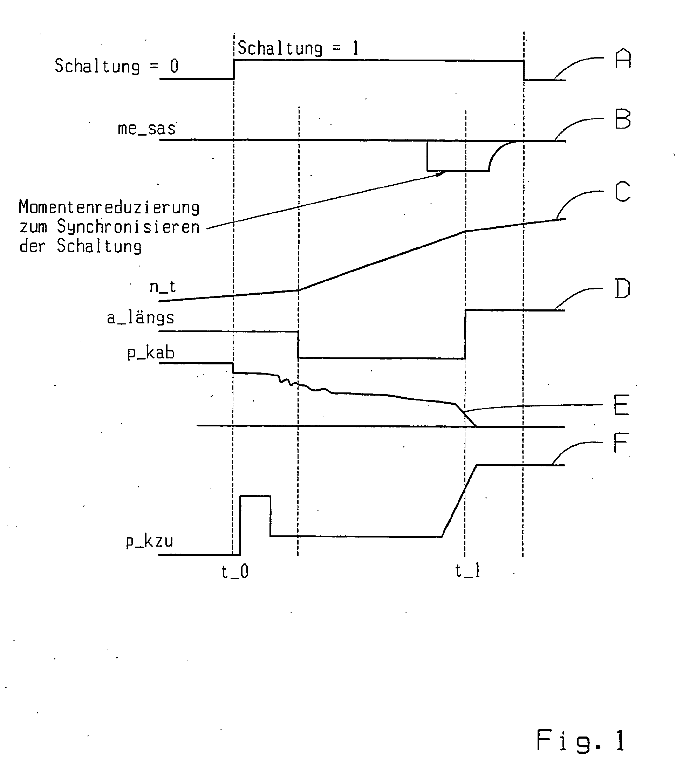

In Fig. 1 entspricht Kurve A dem Verlauf des Schaltsignals, d. h., zum Zeitpunkt t_0 wird die Schaltung (Rückschaltung) eingeleitet; Kurve B entspricht dem aktuellen Motormoment und Kurve C entspricht der Getriebeeingangsdrehzahl (Turbinendrehzahl n_t). Ferner wird durch die Kurve D der Verlauf der Längsbeschleunigung des Fahrzeugs dargestellt; nach der Rückschaltung wird die Beschleunigung erhöht. Die Druckverläufe der abschaltenden Kupplung bzw. des abschaltenden Schaltelementes und des zuschaltenden Schaltelementes werden durch die Kurven E bzw. F wiedergegeben. Gemäß Fig. 1 wird der Druck der zuschaltenden Kupplung während der Schaltung anfangs zum Zweck der Schnellbefüllung sprungartig angehoben; anschließend folgt ein Absenken auf den Füllausgleichsdruck; gefolgt von einem rampenförmigen Duckanstieg ("Schließrampe"), auch über den Synchronpunkt t_1 hinaus.

Aus Fig. 1 geht hervor, dass die Schaltung ohne die erfindungsgemäße Motorbefeuerung zum Zeitpunkt t_1 durch die Momentenübernahme der zuschaltenden Kupplung den Synchronpunkt erreicht. Gemäß der Erfindung kann die Schaltzeit signifikant verkürzt werden, indem eine Motorbefeuerung durch die Getriebesteuerung vorgegeben wird, so dass ein Aufreißen der Kupplung bzw. des Schaltelementes oder eine Erhöhung des Drehzahlgradienten oder eine Kombination beider Maßnahmen erzielt wird.

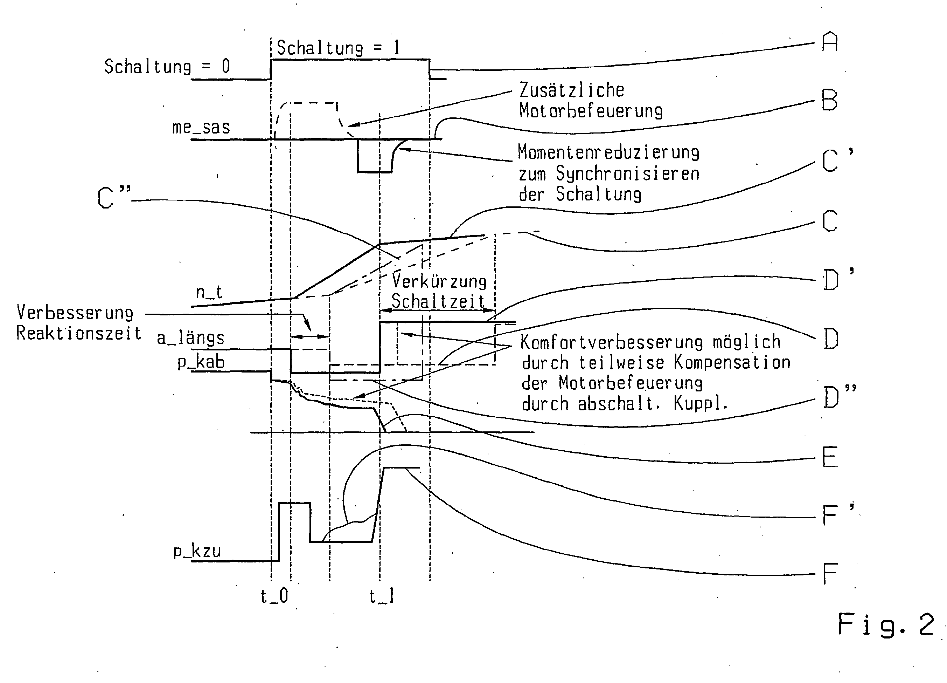

Dies wird in Fig. 2 verdeutlicht: Das Motormoment wird unmittelbar nach dem Schaltbefehl für eine definierte Zeit bzw. Differenzdrehzahl oder für eine definierte Zeit vor Erreichen des neuen Synchronpunktes erhöht. Dies resultiert in einem schnelleren Öffnen des abschaltenden Schaltelementes und somit zu einer Verbesserung der Schaltzeit und zu einer Verkürzung der Reaktionszeit, wie aus Fig. 2 und auch aus dem Vergleich zwischen Fig. 1 und 2 ersichtlich. Die Motorbefeuerung kann auch über die Vorgabe einer einzustellenden Solldrehzahl erfolgen. Zudem ist in den Fig. 1 und 2 eine anschließende Motormomentreduzierung zum Synchronisieren der Schaltung dargestellt.

Durch die erfindungsgemäße Motorbefeuerung wird auch eine Erhöhung des Drehzahlgradienten erzielt; dies wird aus dem Vergleich der Kurven C und C' verdeutlicht, wobei die Kurve C' den Drehzahlverlauf mit Motorbefeuerung darstellt. Wie aus Fig. 2 ersichtlich, erfolgt die Reaktion der Getriebeeingangsdrehzahl n_t im Vergleich zum Stand der Technik erheblich früher; zudem wird die Synchrondrehzahl früher erreicht, so dass sich Reaktions- und Schaltzeit, wie in Fig. 2 entsprechend beschriftet, verkürzen.

Gemäß der Erfindung kann, wenn die tatsächlich ausgeführte zusätzliche Motorbefeuerung auf die Momenteneingangsgröße für die zu schaltende Kupplung übermittelt wird, die zuschaltende Kupplung auf eine auch aus bestimmten Gründen eventuell nicht ausgeführte zusätzliche Motorbefeuerung reagieren und das Erreichen der Synchrondrehzahl durch eine Druckerhöhung zusätzlich unterstützen. Dies wird durch die Kurve F' in Fig. 2 veranschaulicht. Der sich hierdurch einstellende Verlauf der Getriebeeingangsdrehzahl n_t ist mit C" bezeichnet. Bei diesem Verlauf ergibt sich eine Verbesserung der Spontaneität nur durch die erzielte Verkürzung der Schaltzeit infolge des steilen Drehzahlgradienten.

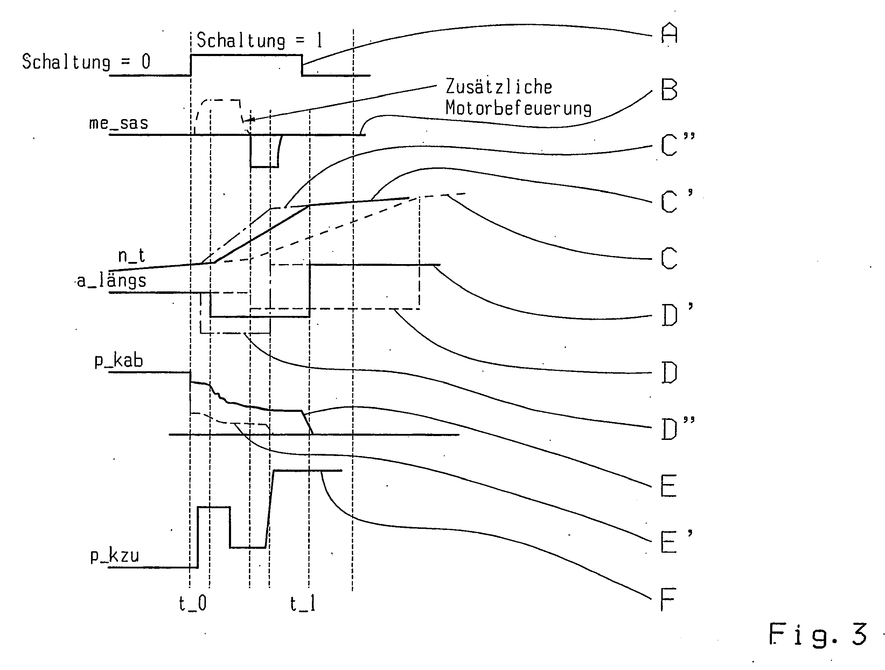

Gemäß der Erfindung kann neben der Motorbefeuerung eine Druckunterstützung des abschaltenden Schaltelementes erfolgen, wie am Beispiel der Fig. 3 gezeigt (Kurve E'). Hierbei wird der Druck am abschaltenden Schaltelement gesenkt, so dass das Öffnen desselben beschleunigt wird. Dies resultiert auch in einer Verkürzung der Reaktionszeit und der Schaltzeit, wie es aus dem Verlauf der Turbinendrehzahl C" ersichtlich wird. Mit C' ist hierbei der Drehzahlverlauf ohne die zusätzliche Druckabsenkung im abschaltenden Schaltelement und mit C der entsprechende Verlauf ohne Motorbefeuerung und Druckabsenkung bezeichnet.

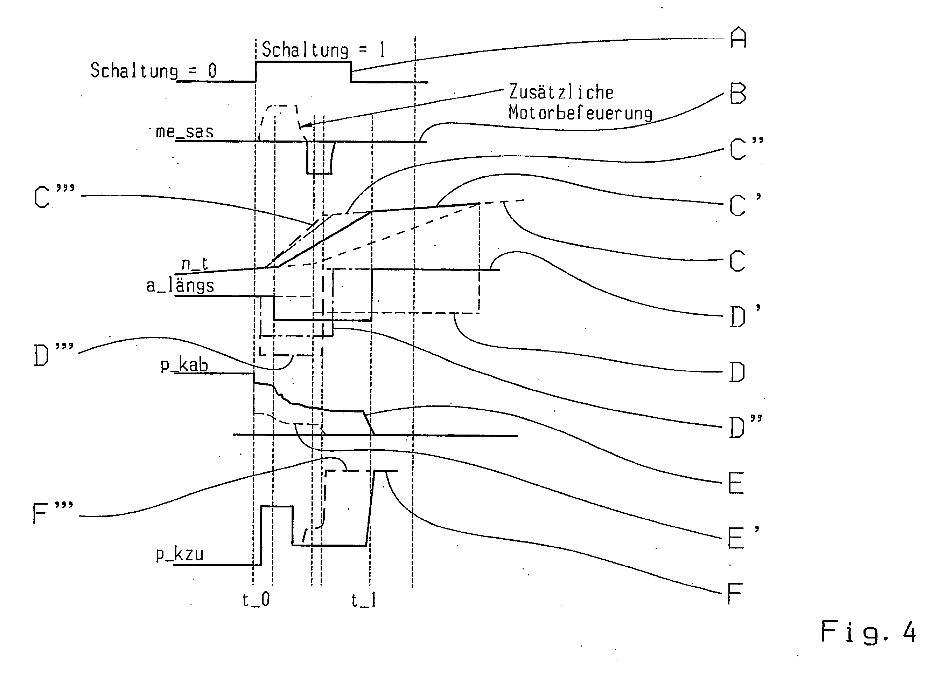

Eine weitere Variante des erfindungsgemäßen Verfahrens zur Erhöhung der Spontaneität sieht vor, dass neben der Motorbefeuerung der Druck am abschaltenden Schaltelement gesenkt und der Druck am zuschaltenden Schaltelement erhöht wird, wie in Fig. 4 beispielhaft gezeigt. Hierbei ist der Druckverlauf der zuschaltenden Kupplung als Kurve F"' dargestellt. Durch diese Maßnahme wird die Reaktionszeit weiter verkürzt und auch der Synchronpunkt t_1 früher erreicht, wie es dem Drehzahlverlauf.C"' zu entnehmen ist.

## Patentansprüche

1. Verfahren zur Erhöhung der Spontaneität von Überschneidungsschaltungen in einem Automatgetriebe, wobei mit dem Schaltbefehl oder unmittelbar danach, eine Motorbefeuerung vorgegeben wird, durch die ein Aufreißen des abschaltenden Schaltelementes und/oder eine Erhöhung des Drehzahlgradienten (Turbinendrehzahl) erzielt wird, wobei die Motorbefeuerung über die Vorgabe einer einzustellenden Solldrehzahl oder über die Vorgabe eines einzustellenden Sollmotormoments erfolgt und durch die Getriebesteuerung vorgegeben wird, **dadurch gekennzeichnet, dass** die Motorbefeuerung bis zur maximal erreichbaren Volllastkurve durchführbar ist, wobei die einzustellende Solldrehzahl und das einzustellende Sollmotormoment in Abhängigkeit von der gewünschten Spontaneitätserhöhung vorgegeben werden.

2. Verfahren nach Anspruch 1, **dadurch gekennzeichnet, dass** das Öffnen des Schaltelementes, welches die Drehzahl auf der alten Synchrondrehzahl hält, zur Absicherung einer ungewollten Übertragung der zusätzlichen angeforderten Motorbefeuerung auf den Abtrieb überwacht wird, wobei das Öffnen dieses Schaltelementes bis zu einer definierten Zeit nach Start der zusätzlichen Motorbefeuerung erfolgen soll und sich anschließend ein entsprechender Drehzahlgradient in Richtung neue Synchrondrehzahl einstellen soll.

3. Verfahren nach Anspruch 2, **dadurch gekennzeichnet, dass** überwacht wird, ob sich eine sich stetig und in einem bestimmten Maße reduzierende Differenzdrehzahl zur neuen Synchrondrehzahl einstellt.

4. Verfahren nach einem der vorangehenden Ansprüche, **dadurch gekennzeichnet, dass** die zusätzliche Motorbefeuerung, wenn nicht eine weitere Schaltung ausgelöst wird, nicht über eine bestimmte Dauer über das Erreichen der neuen Synchrondrehzahl hinaus dauert.

5. Verfahren nach einem der vorangehenden Ansprüche, **dadurch gekennzeichnet, dass** die Momentensignale für die unterschiedlichen Bestandteile des Schaltablaufs bzw. für das abschaltende und das zuschaltende Schaltelement entweder in einem Motorsteuergerät oder in einem Getriebesteuergerät unterschiedlich gebildet und dem jeweils anderen Steuergerät übermittelt werden.

6. Verfahren nach Anspruch 5, **dadurch gekennzeichnet, dass** die tatsächlich ausgeführte zusätzliche Motorbefeuerung nicht an das abschaltende Schaltelement übermittelt wird oder bei der Drucksteuerung des abschaltenden Schaltelements unberücksichtigt bleibt.

7. Verfahren nach Anspruch 5 oder 6, **dadurch gekennzeichnet, dass** die tatsächlich ausgeführte zusätzliche Motorbefeuerung an das zuschaltende Schaltelement übermittelt oder bei der Drucksteuerung des zuschaltenden Schaltelements berücksichtigt wird.

8. Verfahren nach einem der vorangehenden Ansprüche, **dadurch gekennzeichnet, dass** zusätzlich zur Motorbefeuerung der Druck am abschaltenden Schaltelement abgesenkt wird, so dass das Öffnen desselben beschleunigt wird.

9. Verfahren nach einem der vorangehenden Ansprüche, **dadurch gekennzeichnet, dass** zusätzlich zur Motorbefeuerung der Druck am abschaltenden Schaltelement derart erhöht wird, dass ein Beschleunigungseinbruch am Abtrieb des Automatgetriebes reduziert wird.

10. Verfahren nach einem der vorangehenden Ansprüche, **dadurch gekennzeichnet, dass** zusätzlich zur Motorbefeuerung der Druck am zuschaltenden Schaltelement erhöht wird.

## Claims

1. Method for increasing the spontaneity of overlapping shifting operations in an automatic transmission, with a command for engine firing being given with the shift command or directly thereafter, by means of which engine firing the shift element being disengaged is forced open and/or the rotational speed gradient (turbine rotational speed) is increased, with the engine firing taking place by specifying a nominal rotational speed to be set or by specifying a nominal engine torque to be set, and with the command for said engine firing being given by the transmission controller, **characterized in that** the engine firing can be carried out up to the maximum attainable full-load characteristic curve, with the nominal rotational speed to be set and the nominal engine torque to be set being specified as a function of the desired increase in spontaneity.

2. Method according to Claim 1, **characterized in that** the opening of the shift element which holds the rotational speed at the old synchronizing rotational speed is monitored to prevent an undesired transmission of the additional demanded engine firing to the drive output, wherein the opening of said shift element should take place up to a defined time after the start of the additional engine firing and, subsequently, a corresponding rotational speed gradient in the direction of the new synchronizing rotational speed should be generated.

3. Method according to Claim 2, **characterized in that** it is monitored as to whether a rotational speed difference with respect to the new synchronizing rotational speed reduces constantly and to a certain degree.

4. Method according to one of the preceding claims, **characterized in that**, if no further shifting operation is initiated, the additional engine firing does not continue beyond a certain duration after the new synchronizing rotational speed is attained.

5. Method according to one of the preceding claims, **characterized in that** the torque signals for the different parts of the shifting operation, or for the shift element being disengaged and the shift element being engaged, are formed differently either in an engine control unit or in a transmission control unit, and are transmitted to the in each case other control unit.

6. Method according to Claim 5, **characterized in that** the additional engine firing which is actually carried out is not transmitted to the shift element being disengaged, or is neglected in the control of the pressure of the shift element being disengaged.

7. Method according to Claim 5 or 6, **characterized in that** the additional engine firing which is actually carried out is transmitted to the shift element being engaged or is taken into consideration in the control of the pressure of the shift element being engaged.

8. Method according to one of the preceding claims, **characterized in that**, in addition to the engine firing, the pressure at the shift element being disengaged is reduced, such that the opening of said shift element is accelerated.

9. Method according to one of the preceding claims, **characterized in that**, in addition to the engine firing, the pressure at the shift element being disengaged is increased such that an interruption in acceleration at the drive output of the automatic transmission is reduced.

10. Method according to one of the preceding claims, **characterized in that**, in addition to the engine firing, the pressure at the shift element being engaged is increased.

## Revendications

1. Procédé pour augmenter la spontanéité de passages de vitesses à chevauchement dans une transmission automatique, dans lequel, au moment de l'ordre de changement de vitesse ou immédiatement après, un allumage du moteur est prédéfini, lequel permet d'ouvrir l'élément de changement de vitesse à commuter et/ou d'augmenter le gradient de vitesse de rotation (vitesse de rotation de la turbine), l'allumage du moteur s'effectuant par le biais de l'établissement préalable d'une vitesse de rotation de consigne à ajuster ou par le biais de l'établissement préalable d'un couple moteur de consigne à ajuster, et étant prédéfini par la commande de la transmission, **caractérisé en ce que** l'allumage du moteur peut être réalisé jusqu'à la courbe de pleine charge maximale pouvant être atteinte, la vitesse de rotation de consigne à ajuster et le couple moteur de consigne à ajuster étant prédéfinis en fonction de l'augmentation de spontanéité souhaitée.

2. Procédé selon la revendication 1, **caractérisé en ce que** l'ouverture de l'élément de changement de vitesse qui conserve la vitesse de rotation à l'ancienne vitesse de rotation synchrone est contrôlée pour éviter un transfert indésirable à la sortie d'entraînement de l'allumage du moteur demandé subséquemment, l'ouverture de cet élément de changement de vitesse devant avoir lieu en l'espace d'un temps défini après le démarrage de l'allumage subséquent du moteur, et un gradient de vitesse de rotation correspondant devant s'établir ensuite dans le sens d'une nouvelle vitesse de rotation synchrone.

3. Procédé selon la revendication 2, **caractérisé en ce que** l'on contrôle si une vitesse de rotation différentielle diminuant constamment et dans une mesure définie s'établit pour donner une nouvelle vitesse de rotation synchrone.

4. Procédé selon l'une quelconque des revendications précédentes, **caractérisé en ce que** l'allumage du moteur supplémentaire, lorsqu'un changement de vitesse supplémentaire n'est pas enclenché, ne dure pas au-delà d'un temps déterminé au-delà de l'obtention de la nouvelle vitesse de rotation synchrone.

5. Procédé selon l'une quelconque des revendications précédentes, **caractérisé en ce que** les signaux instantanés pour les différents constituants du déroulement du changement de vitesse ou pour l'élément de changement de vitesse à déconnecter et à connecter sont formés différemment soit dans un appareil de commande du moteur soit dans un appareil de commande de la transmission et sont communiqués à l'autre appareil de commande respectif.

6. Procédé selon la revendication 5, **caractérisé en ce que** l'allumage supplémentaire du moteur réalisé effectivement n'est pas communiqué à l'élément de changement de vitesse se déconnectant, ou n'est pas pris en compte lors de la commande de pression de l'élément de changement de vitesse se déconnectant.

7. Procédé selon la revendication 5 ou 6, **caractérisé en ce que** l'allumage du moteur supplémentaire effectivement effectué est transmis à l'élément de changement de vitesse se connectant, ou est pris en compte lors de la commande de pression de l'élément de changement de vitesse se connectant.

8. Procédé selon l'une quelconque des revendications précédentes, **caractérisé en ce qu'**en plus de l'allumage du moteur, la pression au niveau de l'élément de changement de vitesse se déconnectant est réduite de sorte que l'ouverture de cet élément soit accélérée.

9. Procédé selon l'une quelconque des revendications précédentes, **caractérisé en ce qu'**en plus de l'allumage du moteur, la pression au niveau de l'élément de changement de vitesse se déconnectant est augmentée de telle sorte qu'un effondrement de l'accélération à la sortie de là transmission automatique soit réduit.

10. Procédé selon l'une quelconque des revendications précédentes, **caractérisé en ce qu'**en plus de l'allumage du moteur la pression au niveau de l'élément de changement de vitesse à connecter est augmentée.
